# EUROPÄISCHE PATENTSCHRIFT

(11) **EP 2 334 509 B1**
(45) Veröffentlichungstag und Bekanntmachung des Hinweises auf die Patenterteilung: **30.05.2012**
(21) Anmeldenummer: 09781480.0
(22) Anmeldetag: 04.08.2009
(51) Int. Cl.: B60N 2/20, B60N 2/22, B60N 2/36, B60N 2/235

(54) **LEHNENGELENKBESCHLAG FÜR EINEN FAHRZEUGSITZ**
BACKREST HINGE FITTING FOR A VEHICLE SEAT
ARMATURE D'ARTICULATION DE DOSSIER POUR UN SIÈGE DE VÉHICULE

(30) Priorität: 14.08.2008 DE 102008037691
(43) Veröffentlichungstag der Anmeldung: 22.06.2011
(73) Patentinhaber: C. Rob. Hammerstein GmbH & Co. Kg, 42699 Solingen (DE)
(72) Erfinder: BENEKER, Wilfried, 42799 Leichlingen (DE); BECKER, Burckhard, 42657 Solingen (DE); KAISER, Michael, 42111 Wuppertal (DE)
(74) Vertreter: Bauer Vorberg Kayser Patentanwälte
(86) Internationale Anmeldenummer: PCT/EP2009/060105
(87) Internationale Veröffentlichungsnummer: WO 2010/018106

(56) Entgegenhaltungen:
- DE-U1-202005 011 386
- FR-A1- 2 906 196

## Beschreibung

Die Erfindung bezieht sich auf einen Lehnengelenkbeschlag für einen Fahrzeugsitz nach dem Oberbegriff des Patentanspruchs 1. Ein derartiger Lehnengelenkbeschlag ist aus der FR-A-2906196 bekannt.

Lehnengelenkbeschläge mit einem unteren Beschlagteil und mit einem oberen Beschlagteil, wobei das obere Beschlagteil gegenüber dem unteren Beschlagteil über eine Gelenkachse schwenkbar verbunden ist sind allgemein bekannt, nur beispielhaft wird verwiesen auf DE 10 2005 050 222 A1 und DE 10 2005 050 474 A1. Für derartige Lehnengelenkbeschläge werden häufig sogenannte Ronden, beispielsweise Rastronden, eingesetzt, wie sie auch aus den genannten Schriften ersichtlich sind. Alternativ werden Taumelgelenkbeschläge eingesetzt, siehe als Beispiel DE 10 2004 007 043 B3. Diese Gelenkbeschläge lassen sich kontinuierlich über einen großen Winkelbereich, meist über 360° einstellen. Für die Verstellung einer Rückenlehne ist ein derart großer Verstellbereich aber nicht immer erforderlich und gewünscht. Ein solcher Gelenkbeschlag bedeutet zudem einen gewissen Aufwand, er muss mit einem Sitzträger und einem Lehnenträger verbunden werden, er hat meist ein eigenes Gehäuse, das nicht unbedingt erforderlich ist.

Wünschenswert ist es, dass eine Rückenlehne in der Gebrauchsstellung innerhalb eines gewissen Winkelbereichs möglichst feinstufig eingestellt werden kann. Ausgehend von der sogenannten Designposition sind dies einige Winkelgrade nach hinten und einige Winkelgrade nach vorne, beispielsweise 4-10° nach vorn und 15-20° nach hinten. Üblicherweise liegt der gesamte Einstellbereich zwischen 15° und 20°. Ausgehend vom Einstellbereich soll die Rückenlehne nach vorn geklappt werden können. Dabei ist es gewünscht, dass dieser Klappvorgang rasch durchgeführt werden kann und keine Rastung erfolgt. Schließlich ist gewünscht, dass die Rückenlehne in der vorgeklappten Situation arretiert werden kann. Ein Einstellvorgang innerhalb der vorgeklappten Position ist im Allgemeinen nicht erforderlich. All dies ist mit den bekannten Beschlägen nicht möglich.

Hiervon ausgehend ist es Aufgabe der Erfindung, einen Lehnengelenkbeschlag anzugeben, der sich einfach aufbauen lässt und der die genannten Forderungen erfüllt, also nur innerhalb des Einstellbereichs insbesondere feinstufig einstellbar ist, sich rasch nach vorn klappen lässt und in der vorgeklappten Position arretierbar ist.

Diese Aufgabe wird gelöst durch den Lehnengelenkbeschlag mit den Merkmalen des Anspruchs 1.

Der erfindungsgemäße Lehnengelenkbeschlag kommt mit wenigen, einfachen Bauteilen aus. Er lässt sich unmittelbar an den vorhandenen Bauteilen, beispielsweise Lehnenträger und Sitzträger, eines Kraftfahrzeugsitzes realisieren. Er benötigt wenig eigene Bauelemente. Er ist ausgesprochen Platz sparend, er baut sehr flach. Er kann in einer Alternative auch als vorgefertigte Einheit ausgelegt und hergestellt werden, die an einem Lehnenträger und einem Sitzträger montiert wird. Dann liegt ein eigenes oberes Beschlagteil vor, das nicht mit dem Lehnenträger zusammenfällt und es liegt ein eigenes unteres Beschlagteil vor, das nicht Teil des Sitzträgers ist.

In der vorgeklappten Position der Rückenlehne greift die Nase der Sperrklinke in die zweite Vertiefung ein, dadurch wird in der vorgeklappten Position eine Arretierung erreicht. Die Nase steuert auch den Verriegelungsvorgang zwischen den beiden Verriegelungsbereichen. Nur wenn sich die Nase innerhalb der ersten Vertiefung befindet, ist eine Verriegelung möglich. Sobald die Nase sich auf dem Bogenbereich befindet, sind die Verriegelungsbereiche so weit voneinander entfernt, dass ein Eingriff nicht mehr möglich ist. Der erfindungsgemäße Lehnengelenkbeschlag lässt sich daher sowohl innerhalb der Gebrauchsstellung sehr rasch einstellen, man kann unmittelbar von einer hinteren Position in eine vordere Position innerhalb der Gebrauchsstellung verstellen. Er lässt sich aber auch sehr rasch vorklappen, ohne dass dabei die Verriegelungsbereiche stören. Einem Benutzer werden die Grenzen des Einstellbereichs der Gebrauchsstellung der Rückenlehne klar aufgezeigt. Solange die Nase sich innerhalb der ersten Vertiefung befindet, ist die Rückenlehne innerhalb des Einstellbereichs. Erst wenn die Sperrklinke soweit angehoben ist, dass die Nase auf der Höhe des Bogenbereichs ist, kann der Einstellbereich verlassen werden. Damit sind die Bewegungsabläufe klar definiert.

Die Verzahnung der beiden Verriegelungsbereiche ist aufeinander abgestimmt und möglichst feinzahnig. Der Eingriffsbereich erstreckt sich vorzugsweise über einen größeren Winkelbereich, z.B. von 10-30°, so dass eine unfallsichere Arretierung trotz der Feinzahnigkeit erreicht ist. Der Steuerhebel hat einen Klemmarm, der den ersten Verriegelungsbereich in Eingriff mit dem zweiten Verriegelungsbereich bewegt und hält. Die Sperrklinke hat einen Lösevorsprung. Wird der Steuerhebel ausreichend weit geschwenkt, schlägt er an diesen an und schwenkt die Sperrklinke aus einem Eingriff frei.

Der Winkelbereich, innerhalb dessen sich die Nase in der ersten Vertiefung bewegen kann, ist den praktischen Erfordernissen angepasst. Ebenso ist der Winkelbereich, über den sich der Bogenbereich erstreckt, an die praktischen Erfordernisse eines Nutzers angepasst. Die zweite Vertiefung ist winkelmäßig so positioniert, dass die Rückenlehne praktisch waagerecht liegt.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, da unter Bezugnahme auf die Zeichnung im Folgenden näher erläutert wird. In dieser Zeichnung zeigen:
- Fig. 1:: eine Ansicht des Gelenkbeschlags, der sich in der Designposition befindet, eingesetzt ist er zwischen einem Lehnenträger einer Rückenlehne und einem Sitzträger,
- Fig. 2:: eine Darstellung wie Figur 1, jedoch ist die Rückenlehne nunmehr soweit wie möglich innerhalb des Einstellbereichs nach hinten gekippt und arretiert,
- Fig. 3:: eine Ansicht wie Figur 1, jedoch ist die Rückenlehne nunmehr um wenige Winkelgrade nach vorn gekippt, es ist das vordere Ende des Einstellbereichs erreicht, und
- Fig. 4:: eine Ansicht wie Figur 1, jedoch ist die Rückenlehne nunmehr in die Waagerechte nach vorn geklappt.

Der Lehnengelenkbeschlag hat ein oberes Beschlagteil 20 und ein unteres Beschlagteil 22, die über eine Gelenkachse 24 schwenkbar verbunden sind und zu einer Einheit zusammengefasst sind. Das obere Beschlagteil 20 kann, wie dargestellt, ein separates Bauteil sein, das mit einem Lehnenträger 26 verbunden ist, es kann aber auch Teilstück dieses Lehnenträgers 26 sein. In gleicher Weise kann das untere Beschlagteil 22 ein separates Bauteil sein, wie dargestellt, das mit einem Sitzträger 28 verbunden ist, es kann aber auch Teilstück des Sitzträgers 28 sein.

Am oberen Beschlagteil 20 ist eine Sperrklinke 30 schwenkbar um eine Klinkenachse 32 gelagert. Die Sperrklinke 30 ist im Wesentlichen L-förmig. Ein kurzer L-Schenkel bildet eine Nase 34, die zur Gelenkachse 24 hinweist. Ein langer L-Schenkel ist an seinem freien Ende an der Klinkenachse 32 gelagert. Nach oben und in Gegenrichtung zur Nase 34 steht ein Steuervorsprung vor. Gegenüberliegend, an der der Gelenkachse 24 zugewandten unteren Fläche des langen L-Schenkels und in Nachbarschaft der Nase 34 ist ein erster Verriegelungsbereich ausgebildet, er wird durch eine feinzahnige Verzahnung gebildet. Sie erstreckt sich über einen Kreisbogen um die Gelenkachse 34 und um etwa 45° Bogenwinkel.

Weiterhin ist am oberen Beschlagteil 20 und in derselben Ebene wie die Sperrklinke 30 ein Steuerhebel 38 um eine Steuerhebelachse 40 schwenkbar gelagert. In der gezeigten Sperrstellung drückt er die Sperrklinke 30 in die Sperrstellung und hält sie in der Sperrstellung.

Am unteren Beschlagteil 22 sind hintereinander, in negativer x-Richtung gesehen, ein zweiter Verriegelungsbereich 42 und eine Steuerkurve 44 ausgebildet, sie sind zentrisch zur Gelenkachse 24. Der zweite Verriegelungsbereich 42 wirkt mit dem ersten Verriegelungsbereich 36 zusammen und ist entsprechend verzahnt, er erstreckt sich etwa über 30° Bogenwinkel. Die Verzahnung ist so ausgebildet, dass eine möglichst feinstufige Rastung, in Stufen von insbesondere kleiner 1°, vorzugsweise bei etwa 0,5° erreicht wird. Die Steuerkurve 44 ist radial weiter innen angeordnet als der zweite Verriegelungsbereich 42. Der Unterschied beträgt 10-90% der radialen Nasenlänge, konkret des radialen Abstandes zwischen dem freien Ende der Nase und dem ersten Verriegelungsbereich, vorzugsweise liegt der Bereich zwischen 30 und 70%.

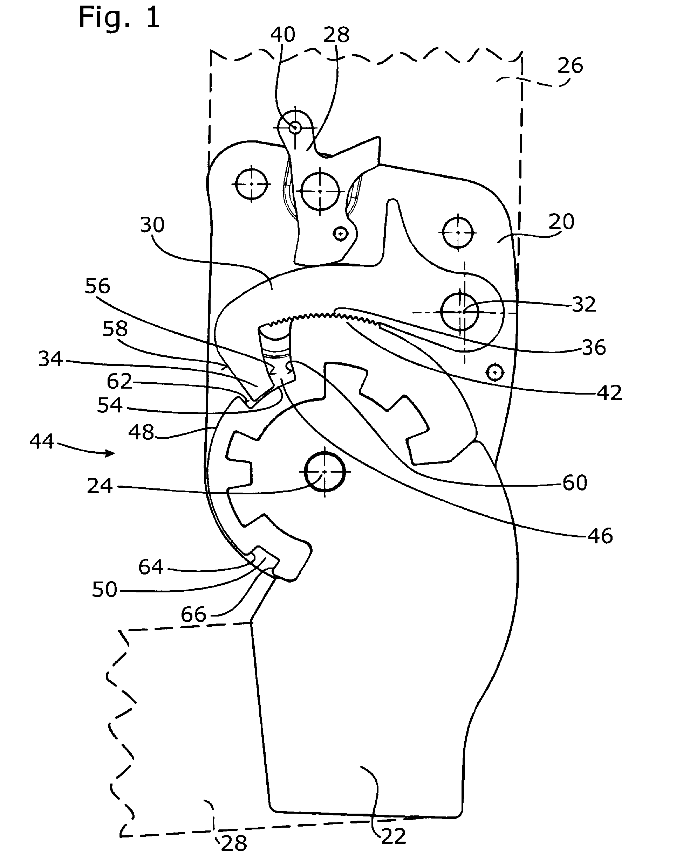

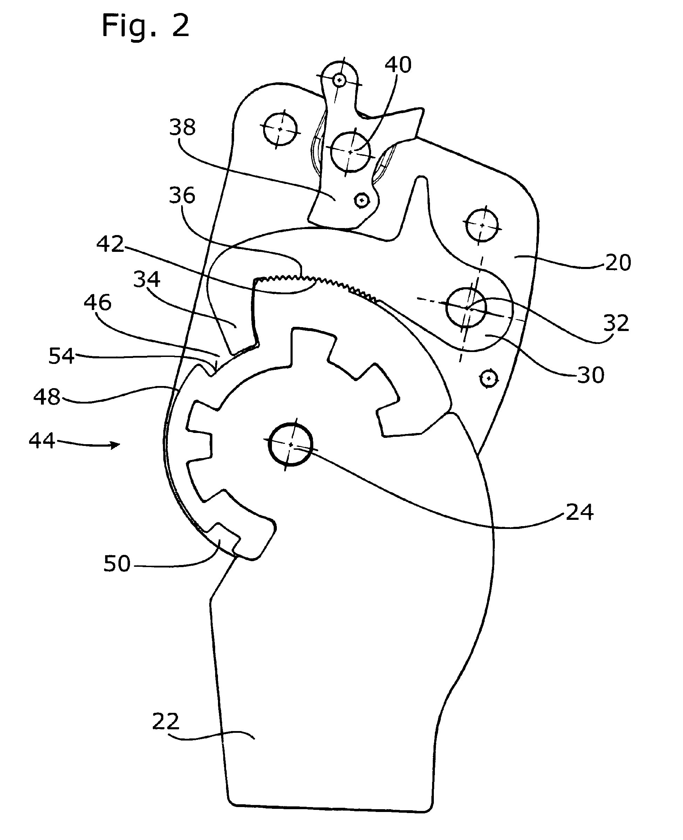

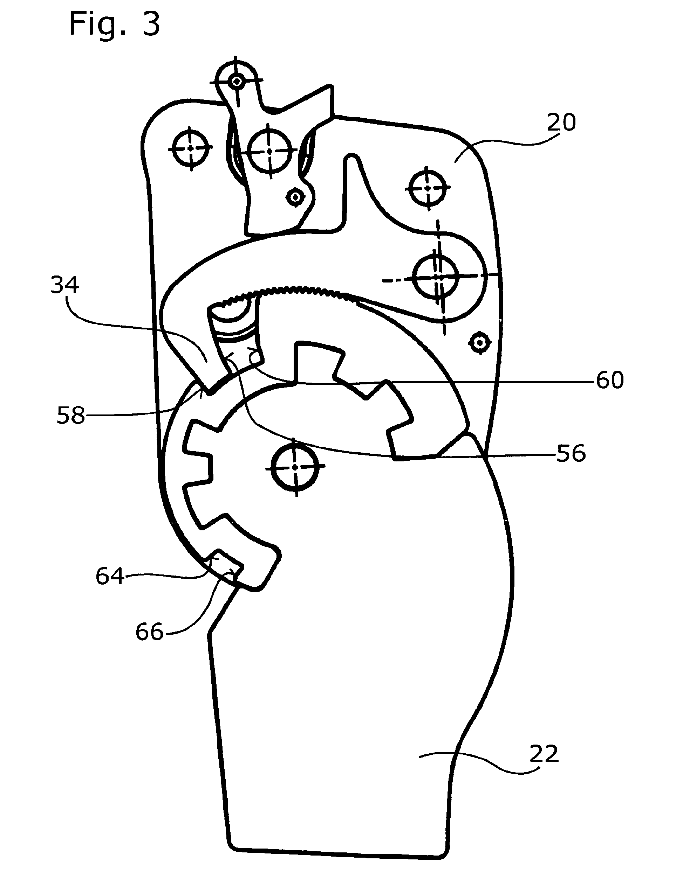

Die Steuerkurve 44 unterteilt sich in drei einzelne Zonen, nämlich eine erste Vertiefung 46, die sich unmittelbar an den zweiten Verriegelungsbereich 42 anschließt, einen Bogenbereich 48 und eine zweite Vertiefung 50. Die erste Vertiefung erstreckt sich über etwa 30° Bogenwinkel. Abzüglich des Bogenwinkels, den die Nase 34 beansprucht, ergibt sich der freie Verstellbereich des Lehnenträgers 26 und damit einer Rückenlehne in der normalen Gebrauchsstellung. Dessen Grenzen zeigen die Figuren 2 und 3. Der Bogenbereich erstreckt sich über ca. 90° Bogenwinkel und ist radial weiter außen als die Vertiefungen 46, 50. Befindet sich die Nase 34 in Kontakt mit dem Bogenbereich 48, ist ein Eingriff der Verriegelungsbereiche 36, 42 nicht möglich. Ein Eingriff der der Verriegelungsbereiche 36, 42 ist nur möglich, wenn die Nase 34 sich innerhalb der ersten Vertiefung 46 befindet. Diese erste Vertiefung 46 hat eine Bodenlinie 54. Sie wird von der Nase 34 nicht berührt, hat also stets einen Abstand vom freien Ende der Nase 34, siehe Figuren 1 bis 3. Damit liegt die Bodenlinie 54 radial um mehr als die freie Länge der Nase 34 der Gelenkachse 24 näher als der zweite Verriegelungsbereich 42.

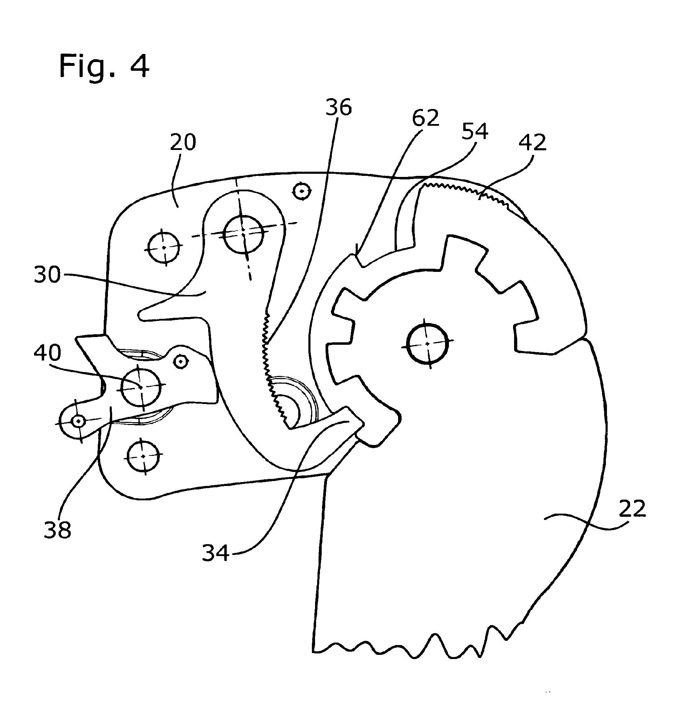

Die zweite Vertiefung 50 nimmt das freie Ende der Nase 34 passgenau auf und bildet somit eine Rastbucht für die Nase 34. Wenn die Nase 34 in Eingriff mit der zweiten Vertiefung 50 ist, ist der Lehnenträger 26 und damit die Rückenlehne praktisch waagerecht. In diesem Zustand ist eine Blockierung möglich, die ist in fig. 4 auch gezeigt, der Steuerhebel blockiert die Sperrklinke 30. Die Vertiefungen 46, 50 liegen auf demselben Kreisbogen um die Gelenkachse 24.

Die Nase 34 hat eine hintere Nasenflanke 56 und eine vordere Nasenflanke 58. Beide verlaufen im Wesentlichen radial. Der Winkelabstand beträgt zwischen 5 und 20°, er liegt z.B. bei 10°. Die erste Vertiefung 46 wird in Umfangsrichtung durch eine hintere Flanke 60 und eine vordere Flanke 62 begrenzt. Auch diese Flanken 60, 62 verlaufen im Wesentlichen radial. Die zweite Vertiefung 50 wird durch eine hintere Rastflanke 64 und eine vordere Rastflanke 66 begrenzt, auch diese verlaufen im Wesentlichen radial.

Die Klinkenachse 32 befindet sich außerhalb des Bogens, auf dem der zweite Verriegelungsbereich 42 liegt. Die Winkelverhältnisse sind so getroffen, dass eine Tagente in der Eingriffszone der beiden Verriegelungsbereiche 36, 42 etwa durch die Klinkenachse 32 verläuft.

In bekannter, hier nicht dargestellter Weise ist der Steuerhebel 38 entweder unmittelbar oder mittelbar über ein geeignetes Zugmittel mit einer aus dem Stand der Technik bekannten Handhabe (nicht dargestellt), die an der Rückenlehne angeordnet ist, verbunden. Die Einstellung der Rückenlehne erfolgt durch Betätigen dieser Handhabe.

Bei der Montage wird das obere Beschlagteil 20 auf eine Unterlage gelegt, es wird nun das untere Beschlagteil 22 draufgelegt. Ebenfalls werden die Sperrklinke 30 und der Steuerhebel 38 auf das obere Beschlagteil aufgelegt. Damit befinden sich die beiden Verriegelungsbereiche 36, 42 zwangsläufig in derselben Ebene. Ebenso befindet sich die Nase 34 in derselben Ebene wie die Steuerkurve 44. Auch unabhängig von der beschriebenen Konstruktion müssen letztere Bedingungen gegeben sein, damit ein Zusammenwirken der Teile möglich ist.

Der Lehnengelenkbeschlag ist für eine Sitzseite beschrieben worden und gezeichnet. Die andere Sitzseite kann passiv über eine starre Verbindung gestellt werden, sie kann aber auch einen eigenen Lehnengelenkbeschlag aufweisen, wobei die beiden Lehnengelenkbeschläge dann synchronisiert sind.

## Patentansprüche

1. Lehnengelenkbeschlag für einen Fahrzeugsitz mit einem unteren Beschlagteil (22) und mit einem oberen Beschlagteil (20), wobei das obere Beschlagteil (20) mit dem unteren Beschlagteil (22) über eine Gelenkachse (24) schwenkbar verbunden ist, am oberen Beschlagteil (20) sind a) eine Sperrklinke (30) um eine Klinkenachse (32) und b) ein Steuerhebel (38) um eine Steuerhebelachse (40) schwenkbar gelagert, der Steuerhebel (38) wirkt mit der Sperrklinke (30) zusammen, die Sperrklinke (30) hat eine Nase (34) und einen ersten Verriegelungsbereich (36), am unteren Beschlagteil (22) ist ein zweiter Verriegelungsbereich (42) vorhanden, und der zweite Verriegelungsbereich (42) wirkt mit dem ersten Verriegelungsbereich (36) zusammen,
**dadurch gekennzeichnet, dass** der zweite Verriegelungsbereich (42) und eine Steuerkurve (44) am unteren Beschlagteil (22) hintereinander angeordnet sind, dass die Steuerkurve (44) mit der Nase (34) der Sperrklinke (30) zusammenwirkt und eine erste Vertiefung (46), einen Bogenbereich (48) und eine zweite Vertiefung (50) hat, wobei die Geometrie so getroffen ist, dass dann, wenn die Nase (34) innerhalb der ersten Vertiefung (46) ist, ein Eingriff der beiden Verriegelungsbereiche (36, 42) möglich ist, dass dann, wenn die Nase (34) auf dem Bogenbereich (48) aufliegt oder im Eingriff in der zweiten Vertiefung (50) ist, die beiden Verriegelungsbereiche (36, 42) nicht im Eingriff sind, und dass dann, wenn die Nase (34) in die zweite Vertiefung (50) eingreift, der Lehnengelenkbeschlag fixiert ist.

2. Lehnengelenkbeschlag nach Anspruch 1, **dadurch gekennzeichnet, dass** die erste Vertiefung (46) eine hintere und eine vordere Flanke (60, 62) aufweist, dass diese beiden Flanken (60, 62) in einem ersten Winkelabstand angeordnet sind, dass die Nase (34) eine hintere und eine vordere Nasenflanke (56, 58) hat, die in einem zweiten Winkelabstand angeordnet sind, und dass die Differenz erster Winkelabstand minus zweiter Winkelabstand dem Einstellbereich einer Rückenlehne des Fahrzeugsitzes innerhalb der Gebrauchsstellung entspricht.

3. Lehnengelenkbeschlag nach Anspruch 1, **dadurch gekennzeichnet, dass** die hintere Vertiefung von einer Bodenlinie (54) begrenzt ist, dass die Bodenlinie (54) der Gelenkachse (24) näher ist als die Nase (34), und dass die Nase (34) nicht in Kontakt mit dieser Bodenlinie (54) kommt.

4. Lehnengelenkbeschlag nach Anspruch 1, **dadurch gekennzeichnet, dass** die zweite Vertiefung (50) durch eine hintere Rastflanke (64) und eine vordere Rastflanke (66) begrenzt ist, dass die Nase (34) eine hintere und eine vordere Nasenflanke (56, 58) hat, und dass der Abstand dieser beiden Rastflanken (64, 66) dem Abstand der beiden Nasenflanken (56, 58) angepasst ist.

5. Lehnengelenkbeschlag nach Anspruch 1, **dadurch gekennzeichnet dass** dann, wenn die Nase (34) in die zweite Vertiefung (50) eingreift, eine Rückenlehne des Fahrzeugsitzes sich in einer vorgeklappten Stellung befindet.

6. Lehnengelenkbeschlag nach Anspruch 1, **dadurch gekennzeichnet dass** die Sperrklinke (30) L-förmig ausgebildet ist und eine kurzen L-Schenkel sowie einen langen L-Schenkel hat, dass der kurze L-Schenkel die Nase (34) bildet, und dass die Klinkenachse (32) am freien Ende des langen L-Schenkels angeordnet ist.

7. Lehnengelenkbeschlag nach Anspruch 1, **dadurch gekennzeichnet dass** der erste Verriegelungsbereich (36) eine größere radiale Entfernung von der Gelenkachse (24) hat als die Steuerkurve (44).

8. Lehnengelenkbeschlag nach Anspruch 1, **dadurch gekennzeichnet dass** der erste Verriegelungsbereich und/oder der zweite Verriegelungsbereich (36, 42) auf einem Kreisbogen um die Gelenkachse (24) verläuft.

9. Lehnengelenkbeschlag nach Anspruch 1, **dadurch gekennzeichnet dass** die zweite Vertiefung (50) der Nase (34) formmäßig angepasst ist.

10. Lehnengelenkbeschlag nach Anspruch 1, **dadurch gekennzeichnet dass** die erste Vertiefung (46) und die zweite Vertiefung (50) auf demselben Kreisbogen um die Gelenkachse (24) liegen.

## Claims

1. Backrest hinge fitting for a vehicle seat, comprising a lower fitting part (22) and an upper fitting part (20), wherein the upper fitting part (20) is pivotably connected to the lower fitting part (22) through a hinge axis (24), at the upper fitting part (20), a) a pawl (30) is mounted so as to be pivotable about a pawl axis (32) and b) a control lever (38) is mounted so as to be pivotable about a control lever axis (40), the control lever (38) cooperates with the pawl (30), the pawl (30) has a lug (34) and a first interlocking area (36), a second interlocking area (42) is provided at the lower fitting part (22), and the second interlocking area (42) cooperates with the first interlocking area (36),
**characterised in that** the second interlocking area (42) and a control ramp (44) are disposed one behind the other on the lower fitting part (22), that the control ramp (44) cooperates with the lug (34) of the pawl (30) and has a first depression (46), a curved area (48) and a second depression (50), wherein the geometry is selected in such a way that, when the lug (34) is in the first depression (46), an engagement of the two interlocking areas (36, 42) is possible, that, when the lug (34) rests on the curved area (48) or is in engagement in the second depression (50), the two interlocking areas (36, 42) are not in engagement, and that, when the lug (34) latches into the second depression (50), the backrest hinge fitting is fixed.

2. Backrest hinge fitting according to claim 1, **characterised in that** the first depression (46) comprises a rear and a front flank (60, 62), that these two flanks (60, 62) are disposed at a first angular distance, that the lug (34) has a rear and a front lug flank (56, 58) disposed at a second angular distance, and that the difference of the first angular distance minus the second angular distance corresponds to the adjustment range of a backrest of the vehicle seat within the use position.

3. Backrest hinge fitting according to claim 1, **characterised in that** the rear depression is limited by a bottom line (54), that the bottom line (54) is closer to the hinge axis (24) than the lug (34), and that the lug (34) does not come into contact with this bottom line (54).

4. Backrest hinge fitting according to claim 1, **characterised in that** the second depression (50) is limited by a rear engaging flank (64) and a front engaging flank (66), that the lug (34) has a rear and a front lug flank (56, 58), and that the distance between these two engagement flanks (64, 66) is adapted to the distance between the two lug flanks (56, 58).

5. Backrest hinge fitting according to claim 1, **characterised in that**, when the lug (34) latches into the second depression (50), a backrest of the vehicle seat is in a folded-forward position.

6. Backrest hinge fitting according to claim 1, **characterised in that** the pawl (30) is configured with an L-shape and comprises a short L-leg and a long L-leg, that the short L-leg forms the lug (34), and that the pawl axis (32) is disposed on the free end of the long L-leg.

7. Backrest hinge fitting according to claim 1, **characterised in that** the first interlocking area (36) has a greater radial distance from the hinge axis (24) than the control ramp (44).

8. Backrest hinge fitting according to claim 1, **characterised in that** the first interlocking area and/or the second interlocking area (36, 42) extend on an arc of a circle around the hinge axis (24).

9. Backrest hinge fitting according to claim 1, **characterised in that** the second depression (50) is adapted to the lug (34) with regard to shape.

10. Backrest hinge fitting according to claim 1, **characterised in that** the first depression (46) and the second depression (50) lie on the same arc of a circle around the hinge axis (24).

## Revendications

1. Garniture d'articulation de dossier pour un siège de véhicule, comprenant une partie inférieure de garniture (22) et une partie supérieure de garniture (20), dans laquelle ladite partie supérieure de garniture (20) est reliée à pivotement par un axe d'articulation (24) à la partie inférieure de garniture (22), sur la partie supérieure d'articulation (20) sont logés à pivotement a) un cliquet d'arrêt (30) autour d'un axe de cliquet (32) et b) un levier de commande (38) autour d'un axe de levier de commande (40), ledit levier de commande (38) agit de concert avec ledit cliquet d'arrêt (30), le cliquet d'arrêt (30) présente un nez (34) et une première zone de verrouillage (36), sur ladite partie inférieure de garniture (22) est présente une deuxième zone de verrouillage (42) et ladite deuxième zone de verrouillage (42) agit de concert avec ladite première zone de verrouillage (36),
**caractérisée par le fait que** la deuxième zone de verrouillage (42) et une came de commande (44) sont disposées l'une derrière l'autre sur la partie inférieure de garniture (22), que la came de commande (44) agit de concert avec ledit nez (34) du cliquet d'arrêt (30) et comprend un premier creux (46), une zone en arc (48) ainsi qu'un deuxième creux (50), la géométrie étant telle que, lorsque ledit nez (34) se trouve à l'intérieur du premier creux (46), un engrènement des deux zones de verrouillage (36, 42) est possible, que, lorsque le nez (34) est en appui sur ladite zone en arc (48) ou se trouve en prise dans ledit deuxième creux (50), les deux zones de verrouillage (36, 42) ne sont pas en prise l'une avec l'autre, et que, lorsque ledit nez (34) s'engrène dans le deuxième creux (50), la garniture d'articulation de dossier est fixée.

2. Garniture d'articulation de dossier selon la revendication 1, **caractérisée par le fait que** le premier creux (46) présente des flancs arrière et avant (60, 62), que ces deux flancs (60, 62) sont disposés à une première distance angulaire, que le nez (34) présente un flanc arrière de nez et un flanc avant de nez (56, 58) qui sont disposés à une deuxième distance angulaire, et que la différence obtenue à partir de la première distance angulaire moins ladite deuxième distance angulaire correspond à la plage de réglage d'un dossier du siège de véhicule à l'intérieur de la position d'usage.

3. Garniture d'articulation de dossier selon la revendication 1, **caractérisée par le fait que** ledit creux arrière est délimité par une ligne de fond (54), que ladite ligne de fond (54) est plus proche de l'axe d'articulation (24) que te nez (34), et que le nez (34) n'entre pas en contact avec cette ligne de fond (54).

4. Garniture d'articulation de dossier selon la revendication 1, **caractérisée par le fait que** ledit deuxième creux (50) est délimité par un flanc arrière d'arrêt (64) et par un flanc avant d'arrêt (66), que ledit nez (34) présente un flanc arrière de nez et un flanc avant de nez (56, 58) et que la distance séparant ces deux flancs d'arrêt (64, 66) est adaptée à la distance des deux flancs de nez (56, 58).

5. Garniture d'articulation de dossier selon la revendication 1, **caractérisée par le fait que**, lorsque le nez (34) s'engrène dans le deuxième creux (50), un dossier du siège de véhicule se trouve dans une position rabattue vers l'avant.

6. Garniture d'articulation de dossier selon la revendication 1, **caractérisée par le fait que** ledit cliquet d'arrêt (30) est réalisé en L et comprend une courte branche de L ainsi qu'une branche longue de L, que ladite courte branche de L forme le nez (34) et que ledit axe de cliquet (32) est disposé à l'extrémité libre de la branche longue de L.

7. Garniture d'articulation de dossier selon la revendication 1, **caractérisée par le fait que** ladite première zone de verrouillage (36) présente une plus grande distance radiale par rapport à l'axe d'articulation (24) que ladite came de commande (44).

8. Garniture d'articulation de dossier selon la revendication 1, **caractérisée par le fait que** ladite première zone de verrouillage et/ou ladite deuxième zone de verrouillage (36, 42) s'étend(ent) sur un arc de cercle autour de l'axe d'articulation (24).

9. Garniture d'articulation de dossier selon la revendication 1, **caractérisée par le fait que** le deuxième creux (50) est adapté, quant à la forme, au nez (34).

10. Garniture d'articulation de dossier selon la revendication 1, **caractérisée par le fait que** ledit premier creux (46) et ledit deuxième creux (50) sont situés sur le même arc de cercle autour de l'axe d'articulation (24).
